# DEMANDE DE BREVET EUROPEEN

(11) **EP 1 531 119 A1**
(43) Date de publication de la demande: **18.05.2005**
(21) Numéro de dépôt: 03026329.7
(22) Date de dépôt: 17.11.2003
(51) Int. Cl.: B62J 11/00, A42B 3/04

(54) **Support pour casque**

(71) Demandeur: Cortat, Didier, 2714 Les Genevez (CH)
(72) Inventeur: Cortat, Didier, 2714 Les Genevez (CH)
(74) Mandataire: Gresset, Jean

(57) **Abrégé**

Support pour casque (16) comprenant :
- des moyens de fixation (10) destinés à être assemblés à un organe tubulaire (12) du vélo, et
- des moyens d'accrochage (14) reliés aux moyens de fixation (10) et destinés à assurer le maintien du casque (16) sur son support.

Ces moyens d'accrochage (14) comportent un organe agencé de manière à coopérer avec un organe complémentaire solidaire du casque, lesdits organes étant d'un type permettant un enlèvement du casque (16) de son support par un mouvement inscrit dans le plan de déplacement du vélo.

## Description

La présente invention se rapporte aux supports pour casques destinés à être fixés sur le châssis d'un vélo, tant à l'arrêt qu'en roulant. Il apparaît en effet que, si le port du casque est important à plat ou à la descente, il peut être gênant lors des fortes montées.

Un support de ce type est décrit dans le document EP 0723 906. Il comprend :
- des moyens de fixation destinés à être assemblés à un organe tubulaire du vélo, et
- des moyens d'accrochage reliés aux moyens de fixation et destinés à assurer le maintien du casque sur son support.

Les moyens d'accrochage comportent un logement muni d'une ouverture oblongue. Le casque porte une plaquette fixée sur ou venue de matière avec sa coque, agencée de manière à ce qu'elle puisse être engagée dans le logement.

Une rotation du casque en référence au support provoque le verrouillage de la plaquette dans le logement.

Un tel support permet certes de fixer le casque sur le vélo. Il est toutefois difficile de l'y placer ou de l'y reprendre tout en roulant. Or, lors de courses il n'est pas envisageable que le coureur s'arrête pour enlever ou remettre son casque.

Si la solution décrite ci-dessus permet donc une fixation sûre, il est toutefois difficile d'enlever le casque de son support et à plus forte raison de l'y placer, un mouvement de rotation tel qu'envisagé n'étant pas ergonomique. Par ailleurs, le casque doit être soit muni d'une plaquette lors de sa fabrication, soit modifié pour en être équipé. Une fabrication spécifique du casque limite le marché, alors qu'une modification peut affecter ses qualités de protection.

Le but de la présente invention est de pallier ces inconvénients et plus particulièrement de permettre d'enlever et de remettre le casque sans devoir descendre du vélo, ni devoir faire des gestes inconsidérés. Ce but est atteint grâce au fait que les moyens d'accrochage comportent un organe agencé de manière à coopérer avec un organe complémentaire solidaire du casque, ces organes étant d'un type permettant un enlèvement du casque de son support par un mouvement inscrit dans le plan de déplacement du vélo.

Afin de permettre un positionnement optimum du support, ce dernier comporte, en outre, un bras muni d'une articulation et reliant les moyens de fixation aux moyens d'accrochage.

Le casque peut être fixé de manière sécurisée du fait que l'articulation comporte une serrure. Il est ainsi possible de bloquer les bras dans une position telle que le casque sur son support ne peut pas en être retiré.

Dans un premier mode de réalisation, les organes sont de type à tissu agrippant, notamment connu sous le nom de Velcro ®.

Dans un deuxième mode de réalisation, les organes sont de type magnétique.

Dans un troisième mode de réalisation, les organes sont de type à enclenchement élastique.

D'autres avantages et caractéristiques de l'invention ressortiront de la description qui va suivre, faite en regard du dessin annexé, dans lequel:
- Les figures 1 et 2, représentent dans deux positions, un premier mode de réalisation de l'invention, et
- Les figures 3 et 4 représentent deux autres modes de réalisation.

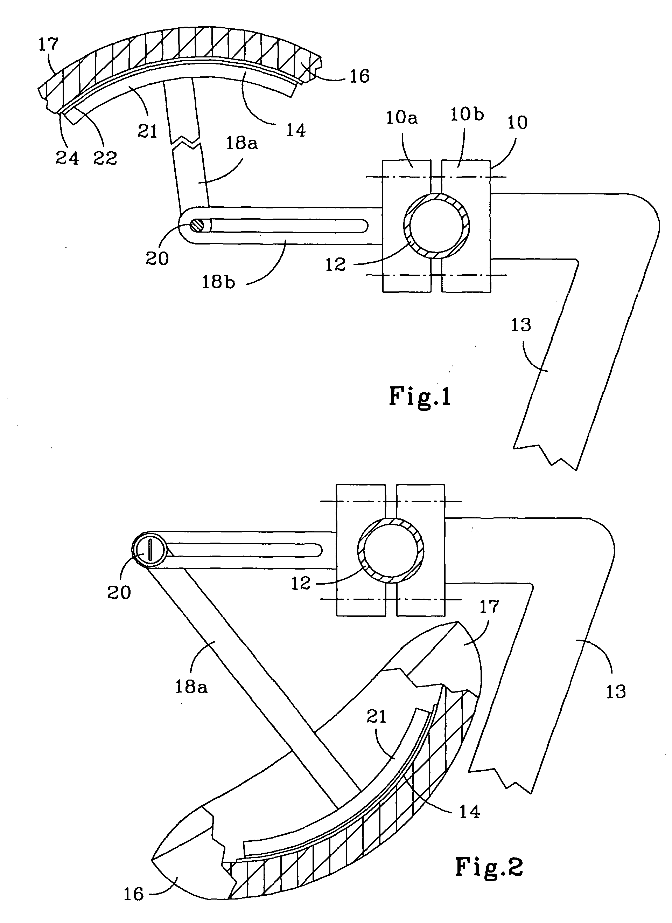

Le support représenté à la figure 1 comporte des moyens 10 de fixation du support sur le vélo schématiquement représenté en coupe, destinés à enserrer un organe tubulaire 12 d'un vélo, par exemple son guidon, lequel est solidaire d'une potence 13 montée pivotante sur le cadre. Il comporte, en outre, des moyens d'accrochage 14 destinés à fixer un casque 16 partiellement représenté en coupe et comportant une coque 17, et un bras de liaison 18 reliant les moyens de fixation 10 aux moyens d'accrochage 14. Le bras 18 comporte deux segments 18a et 18b reliés entre eux par une articulation 20. Sur cette figure, le plan du dessin est confondu avec le plan de déplacement du vélo. Le support se trouve donc à l'avant du vélo

Les moyens de fixation 10 comprennent deux pièces en C 10a et 10b, reliées entre elles par des vis schématiquement représentées par des traits d'axes, l'organe tubulaire 12 étant enserré entre les deux faces concaves des pièces 10a et 10b.

Les moyens d'accrochage 14 sont formés d'une plaque 21, par exemple en plastique injecté, présentant une face concave sur laquelle est fixé le segment 18a du bras 18 et une face convexe revêtue par collage d'un tissu 22 de type agrippant, connu par exemple sous le nom de bande « Velcro » ®. La face intérieure du casque 16 est revêtue d'un tissu 24 du type complémentaire au tissu 22, de manière à ce qu'en appliquant la face interne du casque 16 sur la face convexe de la plaque 21, il s'y fixe instantanément, sans qu'il soit nécessaire de faire un autre mouvement.

L'articulation 20 est réalisée au moyen d'une tige de métal engagée dans des trous disposés en face l'un de l'autre, que comportent les segments 18a et 18b. Cette tige est avantageusement filetée et porte une vis à ailettes permettant de serrer les segments l'un contre l'autre et de les maintenir ainsi dans une position ergonomiquement satisfaisante pour l'utilisateur. Le trou que comporte le bras 18b est allongé, de telle sorte qu'il est possible d'éloigner plus ou moins les moyens d'accrochage 14 du tube 12 du guidon.

La figure 2 représente le support avec son bras plié de manière telle que le casque 16 est intercalé entre les moyens d'accrochage 14 et la potence 13. Il est possible d'atteindre cette position par un simple pivotement du segment 18a sur l'articulation 20. Aussi, le casque 16 est coincé entre les moyens d'accrochage 14 et la potence 13, de telle sorte qu'il n'est plus possible de l'enlever de son support sans déplacer le segment 18a. Avec une telle configuration, et dans la mesure où l'articulation 20 comporte un système de verrouillage à clé, le casque sur le vélo peut être laissé en réduisant considérablement le risque de vol.

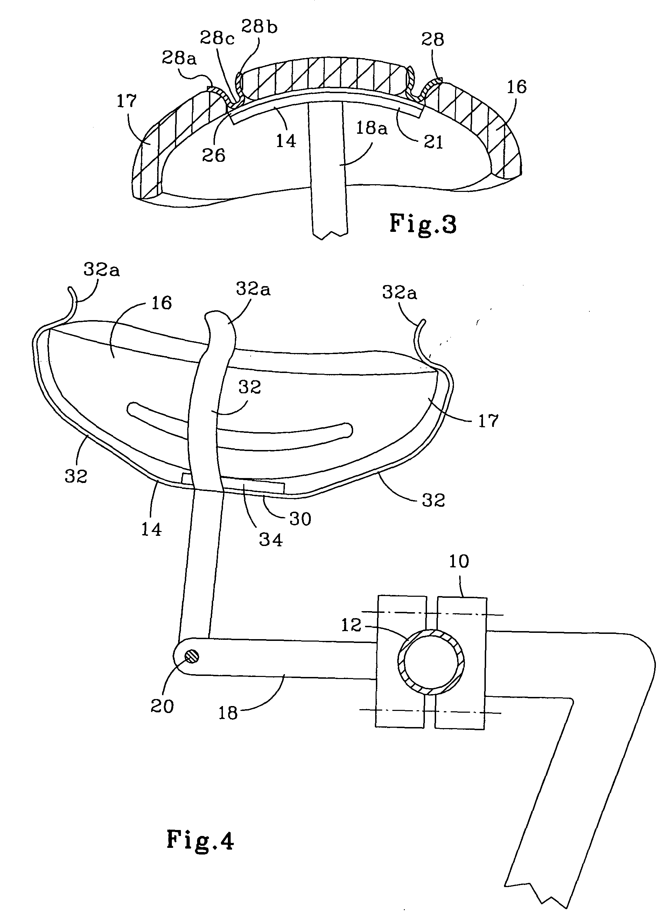

Sur la figure 3, un autre mode de réalisation est représenté en coupe selon un plan perpendiculaire à l'axe longitudinal du casque, et en conséquence au plan de déplacement du vélo. Le tissu 22 est remplacé par une feuille souple 26 en particules de matériau magnétique noyées dans un liant plastique. Le casque 16 est muni de clips 28 comportant deux bras élastiques 28a et 28b engagés dans les fentes d'aération du casque et une pastille 28c de matériau magnétique doux disposée dans la partie comprise entre les bras, et qui entre en contact avec la feuille 26 lorsqu'on pose le casque 16 sur la plaque 21.

Le support représenté à la figure 4 permet de fixer le casque sur le vélo par enclenchement élastique. On y retrouve les moyens de fixation 10 destinés à être assemblés à un organe tubulaire 12 du vélo, les moyens d'accrochage 14 et le bras articulé 18. Dans ce mode de réalisation, les moyens d'accrochage 14 comportent une portion centrale 30 solidaire de l'une des extrémités du bras 18 et quatre bras 32, disposés en croix et incurvés vers le haut pour former ensemble un espace concave destiné à recevoir le casque 16. Les extrémités libres 32a des bras 32 comportent chacune un bossage agencé de manière à former un cran coopérant avec le bord de la coque 17 par engagement du casque 16 dans l'espace concave, ce cran pouvant être vaincu pour retirer le casque par une simple traction. En d'autres termes, le bord de la coque 17 coopère avec les bras 32 pour assurer une fixation par enclenchement élastique.

La portion centrale 30 est avantageusement munie d'un coussin 34 destiné à éviter que le casque 16 ne soit soumis à des chocs lorsqu'il est engagé sur son support.

Dans ce mode de réalisation, le casque 16 est orienté avec sa portion concave tournée vers le haut. Avec une telle disposition, le passage de la tête au support peut se faire par un simple mouvement de pivotement du coude.

Dans une variante qui n'a pas été représentée, il est avantageusement possible de recouvrir l'organe d'accrochage 14, lorsqu'il n'est pas utilisé, de manière à le protéger des intempéries.

Il apparaît que, pour chacun des modes de réalisation décrits ci-dessus, le casque peut être disposé avec facilité sur son support et repris sans effort, tout en garantissant une tenue en place sûre. Il est donc de la sorte possible d'enlever et de remettre le casque, même en roulant.

## Revendications

1. Support pour casque (16) comprenant :
- des moyens de fixation (10) destinés à être montés sur un organe tubulaire (12) du vélo, et
- des moyens d'accrochage (14) reliés aux moyens de fixation (10) et destinés à assurer le maintien du casque (16) sur son support,
**caractérisé en ce que** lesdits moyens d'accrochage (14) comportent un organe agencé de manière à coopérer avec un organe complémentaire solidaire dudit casque, lesdits organes étant d'un type permettant un enlèvement du casque (16) de son support par un mouvement inscrit dans le plan de déplacement du vélo.

2. Support selon la revendication 1, **caractérisé en ce qu'**il comporte, en outre, un bras (18) muni d'une articulation (20) et reliant les moyens de fixation (10) aux moyens d'accrochage (14).

3. Support selon la revendication 2, **caractérisé en ce que** ladite articulation (20) comporte une serrure permettant de la bloquer dans une position dans laquelle le casque (16) sur son support ne peut pas en être retiré.

4. Support selon la revendication 1, **caractérisé en ce que** lesdits organes (20, 22) sont de type à tissu agrippant.

5. Support selon la revendication 1, **caractérisé en ce que** lesdits organes (26, 28c) sont de type magnétique.

6. Support selon la revendication 1, **caractérisé en ce que** lesdits organes (17, 32) sont de type à enclenchement élastique.
